# EUROPEAN PATENT APPLICATION

(11) **EP 0 909 626 A2**
(43) Date of publication of application: **21.04.1999**
(21) Application number: 98308470.8
(22) Date of filing: 16.10.1998
(51) Int. Cl.: B29C 45/00, B29C 45/73, B29C 45/78

(54) **Method and apparatus for injection moulding plastics**

(30) Priority: 17.10.1997 JP 284817/97; 09.04.1998 JP 97083/98
(71) Applicant: TOHOKU MUNEKATA Co., Ltd., Fukushima-shi, Fukushima-Ken (JP)
(72) Inventor: Kato, Takeshi, c/o Tohoku Munekata Co., Ltd., Fukushima-shi, Fukushima-ken (JP); Tateyama, Hirofumi,c/o Tohoku Munekata Co., Ltd., Fukushima-shi, Fukushima-ken (JP); Ishiyama, Hideyuki,c/o Tohoku Munekata Co., Ltd., Fukushima-shi, Fukushima-ken (JP); Suzuki, Kiyoshi,c/o Tohoku Munekata Co., Ltd., Fukushima-shi, Fukushima-ken (JP)
(74) Representative: King, James Bertram

(57) **Abstract**

To avoid surface defects during the production of injection moulded plastic products, the surface temperature of the metallic mould is raised above the injection transfer temperature of the plastic resin when the resin is non-crystalline or above the fusion point temperature if the resin is crystalline, using a temperature increase rate greater than 2° C per second. This temperature is maintained during the resin charging period followed by cooling at a decreasing rate greater than 2° C per second after the completion of charging. The temperature control is conducted using a feed back control with a detector for determining the surface temperature of the metallic mould and mounted close to the surface of the metallic mould.

## Description

This invention relates to an injection moulding method primarily for preventing the appearance of surface defects such as flow marks, welding and shrinkage of the product when the transition zone between the metallic mould surface and the moulded product surface has been formed during injection moulding of the plastic products. This invention also relates to the metallic mould used in the injection moulding and to the manufacturing method for the mould.

More particularly, this invention relates to an injection moulding method capable of conducting the transfer and providing a product of high quality and precision by controlling the temperature of the product's visible surface in the metallic mould in order to conform fully to the metallic mould being used. This invention relates also to the manufacturing method of the metallic mould used.

In conventional plastic injection moulding which is conducted with the entire metallic mould at a low temperature or a certain temperature, the resin material such as molten thermoplastic resin is rapidly cooled down from the surface which is in contact with the metallic mould and a thick solidified layer is formed such that the transition zone between the metallic mould surface and the product surface is not sufficiently defined due to heat shrinkage, with the transition defects such as flow marks, fusion, shrinkage and the like being produced. This is because the hard solidified surface layer of resin hinders the deformation due to the internal pressure of resin, the resin surface closely adheres to the metallic mould surface and prevents the flow.

Further, in the case of mouldings containing fillers such as glass fibre, beads and rubber particles such as butadiene, incorporated into the resin for reinforcing the mechanical strength of the resin, these may be left on the resin surface by thermal shrinkage forming irregularities and worsening the flow property and degrading the outside appearance of the product.

This kind of defect not only degrades the outside appearance of the product and reduces the product value but also prevents a uniform surface coating forming which leads to increased cost for subsequent processing. Further, in an extreme case, the surface smoothness accuracy or the outside appearance required cannot be satisfied, thus making the product useless.

These kinds of defects can be improved to a certain degree by making the resin pressure inside the metallic mould higher thus pressing the resin against the metallic mould surface and by reducing the volume of filler, rubber particles or the like contained in the resin material, by making the diameter of grain size smaller, or by improving the material resin itself. However, making the metallic mould internal pressure higher necessitates a mould of higher strength and a larger moulding machine capable of generating such a high pressure. This causes problems related to higher cost and internal stress of the product itself and the generation of deformation. Further, the improvement in the resin itself may cause problems as the necessary strength cannot be satisfied because of changes in the outside appearance.

The highest effect on the transition defect is to heat the surface of the surface of the metallic mould which is in contact with the product to a level higher than the softening temperature if the material resin is non-crystalline and to heat the said surface to the level higher than the fusion temperature if the resin is crystalline. This is because the solidified layer of resin in contact with the metallic mould tends to become thinner and deformed and to reproduce the surface of the metallic mould faithfully by making the surface of the mould higher in temperature.

However, if the surface of the metallic mould is simply heated, the product surface is exposed to a high temperature for a longer period than necessary and then new problems appear such as the deformation of the product, the moulding cycle is lengthened and thus the product cost becomes higher. Also, if the necessary high metallic mould surface temperature should not be reached or if the metallic mould surface temperature should be to high, the outside appearance and the shape and accuracy are damaged, thus causing a loss in production. Therefore, it is essential not only to monitor the temperature of the metallic mould surface with high accuracy but also to improve the temperature control of the metallic mould, and to control the heating and cooling temperatures of the metallic mould surfaces to the target temperature and time with high accuracy within a short time based on the detected temperature.

Conventionally, the method for controlling the metallic mould temperature is not to directly detect the surface temperature of the metallic mould, but to detect the temperature of the heating medium and cooling medium being supplied to the metallic mould using a temperature sensor located on the medium conduit surface or in the conduit itself in order to control the medium temperature based on the detected temperature and thus control the metallic mould temperature. For directly detecting the metallic mould surface temperature the temperature detection sensor is provided inside the metallic mould as an insert which is machined and fitted into the surface of the metallic mould.

In an attempts to improve the metallic mould temperature control, to shorten the metallic mould heating time and to raise the control accuracy of metallic mould temperature, a variety of means are proposed.
(1) An induction coil is located around the outer circumference of the metallic mould (Japan Unexamined Utility Model Publication No. S62-111832).
(2) A high frequency induction coil comprising a copper pipe also feeding cooling water to the mould (Japanese Unexamined Patent Publication No. S63-15707).
(3) A movable insert die provided with an electric heater is inserted into or pulled out of the metallic mould (Japanese Unexamined Patent Publication No. S63-15719).
(4) A device is installed for changing rapidly heating or cooling of the medium for mould temperature control or the heating or cooling medium fed to the outside of the mould, and the heating or cooling medium being supplied can heat or cool the metallic mould through a temperature adjusting medium circulation channel inside the metallic mould (Japanese Unexamined Patent Publication No. S62-15707, Japanese Unexamined Patent Publication No. S62-208918, Japanese Examined Patent Publication No. H7-25115).

As described earlier, defects in the product can be improved by heating to a high temperature the surface where the resin material flows in the metallic mould but if a long time is taken for the heating and cooling, then problems occur because the moulding cycle is lengthened, productivity falls and a rise in product cost will occur. Further, if the control accuracy of metallic mould surface temperature should be reduced, and the moulding effected at a temperature of the surface temperature of the metallic mould, being the softening transition temperature in the case that the material resin is non-crystalline, or the metallic mould surface temperature which is lower than the fusion temperature in the case that the resin is crystalline, surface defects are produced in the product. On the contrary, if the metallic mould surface temperature is too high or the product has been exposed to a high temperature for many hours, the shrinkage volume of material resin becomes greater, and fillers such as rubber grains, glass, butadiene and the like are left on the resin surface by post-moulding shrinkage.

Therefore, to obtain a high quality product, it is necessary not only to detect the surface temperature of the metallic mould with high accuracy but also to improve the temperature response and stability of the metallic mould, and to control the heating and cooling temperatures of the metallic mould surface within a short time, with high accuracy to the targeted temperature and time on the basis of the detected temperature.

However, with the method for controlling the surface temperature of the metallic mould, detecting the temperature of the heating and cooling medium supplied to the mould without detecting directly the surface temperature of metallic mould as in the conventional method and controlling the thermal medium temperature based on this detected temperature to control the surface temperature of the metallic mould, there is a difference in the temperature and the heating and the cooling time between the heating and cooling medium temperatures and the surface temperature of the metallic mould. The difference is effected by the controlled temperature and does not remain constant. Therefore, it is difficult to predict the range of the temperature and time difference between the heating and cooling thermal medium temperatures and the surface temperature of the metallic mould and to heat or cool the surface of the mould with high accuracy to the selected temperature and time.

In the method for installing the temperature detection sensor into the metallic mould by machining and fitting the whole insert die into the surface of the metallic mould to detect the surface temperature of the metallic mould to control the heating and cooling medium temperatures, there is the disadvantage of decreasing the response time because the temperature detection sensor is installed into the insert die and the metallic mould by machining, whereby there exists the gap between the temperature detection sensor and the insert die and the metallic mould, thus the heat transfer is poor. In addition, as no means for controlling the temperature of the metallic mould is provided, there appears a time difference between the temperature and temperature change between the surface temperature of surrounding metallic mould and the detected temperature by the temperature detection sensor.

In addition, because in the conventional mould structure the mould temperature adjusting medium channel and the temperature detection sensor are separated by more than several tens millimetres from the surface of the metallic mould, there appears a temperature and time difference due to this distance which becomes a hindrance in controlling the surface temperature of the metallic mould with high accuracy.

In the method of attempting to improve the temperature response of the mould, to shorten the heating time and to enhance the control accuracy of the mould temperature, there are problems with the known conventional method.

The above mentioned prior art items (1) and (2) using an induction coil has many restrictions on the incorporation into a mould, as the mould is enlarged. The item (3) having a movable insert die with an electric heater must provide for the insertion area of the mobile insert die on the mould, and the structure of metallic mould becomes complex. Further, because natural cooling is adopted, the moulding cycle is longer. The item (4) for heating and cooling the surface of metallic mould by passing heating and cooling media through the temperature adjusting circulation pipe has the advantage that the structure of the mould requires no special machining. However, if the temperature adjusting medium channel inside the mould has a range which is usually installed, the thermal capacity of the heating or cooling zone is large and hence there appears a loss of heat, and time is required for heating and cooling. Further, there is a problem with the control accuracy of the temperature which becomes worse because the response of the surface temperature of the mould is retarded.

The first object of this invention is to provide at a low mould pressure high precision and transcription plastic products by giving due attention to the surface temperature of the mould and to the control of the temperature during the injection moulding process.

The second object of this invention is to provide a metallic mould having a temperature detection sensor and the thermal medium flow channel capable of controlling the surface temperature of the metallic mould with high accuracy.

The third object of this invention is to provide a metallic mould manufacturing method capable of providing a mould for high precision plastic products through control of the surface temperature of the metallic mould.

According to this invention there is provided a method for injection moulding plastics at low pressures to provide high precision moulded products characterised in that the metallic injection mould temperature is controlled over a short time and at a high rate of change using a temperature increase rate greater than 2° C per second to raise the metallic mould surface temperature in contact with the plastics product to a level higher than the (glass) transfer or injection temperature of the plastics resin where the resin material is non-crystalline, and after maintaining this temperature during the resin mould charging time, cooling down the metallic mould surface after the completion of charging over a short time and at a high rate of change using a temperature reduction rate of greater than 2° per second.

In this invention the various problems referred to in the prior-art review were studied and solved by the moulding method using a metallic mould surface in contact with the product and at a high temperature with the metallic mould structure having good temperature response. As a result, in the injection moulding method, is produced a plastic product capable of a high transcription at a low temperature without lengthening the moulding cycle by conducting the temperature cycle of the mould at a fast rate greater than 2° C per second in the metallic mould surface in contact with the product over a short time and up to a level higher than the glass transfer temperature if the material resin is non-crystalline and up to a level higher than the fusion temperature if the resin is crystalline, and maintaining this temperature while charging the resin, and rapidly cooling down over a short period the metallic mould surface and at a temperature lowering rate of more than 2° C per second after the completion of resin charging.

The structure of the metallic mould and a manufacturing method that makes possible a rapid heating and cooling is described in Japanese Patent Application No. H8-184441, application date 15th July 1996.

The moulding method can also be applied to gas assisted moulding, compression moulding or the like in addition to the customary injection moulding methods.

The resins (plastics) to which the moulding can be applied using metallic moulds of this invention not only include universal type resins such as poly-olefin resin, polystyrene resin, ABS resin and such industrial resins as poly-carbonate resins and poly-amide resins, but mixtures of various resins and resins mixed with organic and inorganic fillers and foaming agents, giving metallic and grain finishes using reinforcing material or fillers.

As described above, in the injection moulding, if the moulding method for rapidly heating the metallic mould face in contact with the product rapidly to a level higher than the glass transfer temperature, if the material resin is non-crystalline, and to the level higher that the fusion temperature, if the resin is crystalline, and maintaining this temperature during the resin charging, and rapidly cooling down over a short period after the completion of charging is used, the consolidation layer of resin surface in contact with the metallic mould surface that was heated to the high temperature during the charging is unlikely to develop and is thinner and more likely to deform in comparison with the conventional moulding at lower mould surface temperatures. For this reason, the resin surface conforms to the metallic mould surface easily under the internal pressure of resin, and transcription is improved. Moreover, by the adhesion, a high physical joint connection strength can be obtained between the resin and the metallic mould surface, the separation of resin is delayed, and the solidification layer develops to the sufficient strength in the meantime, and hence there is less influence due to the thermal shrinkage of resin. For this reason, transcription defects attributable to residue on the resin surface of such fillers as glass and rubber particles such as butadiene are not produced.

Because the resin surface can be deformed, the resin internal pressure necessary for forcing the resin surface against the metallic mould face for transcription can be lower. As the solidification layer of resin is thin, the pressure loss of resin is small, and it is possible to mould the resin at the lower mould internal pressure than with conventional moulding methods.

If the material resin is exposed to a high temperature metallic mould surface for longer than necessary the shrinkage volume of the resin becomes greater, and the substances incorporated into the resins such as glass and rubber fillers are left on the resin surface by post-moulding shrinkage and a transcription defect occurs.

Furthermore, if the resin should be moulded with the metallic mould surface being raised to a high temperature then deformation tends to appear on the products should the cooling speed be slow.

If the heating and cooling of the metallic mould surface cannot be achieved within a short time, the moulding cycle is lengthened.

In order to enable a better understanding of this invention to be obtained reference is now made to the following description taken in conjunction with the accompanying drawings showing embodiments by way of examples only.

In the drawings:
- Figure 1: is a cross-section showing an example of an injection moulding metallic mould relating to the embodiment of the moulding method according to this invention,
- Figure 2: is a cross-section viewed from the rear face side (the side opposite the product face) of the metallic mould surface heating and cooling insert die piece,
- Figure 3: is a cross-section taken along the line A-A' of Figure 2,
- Figure 4: is a cross-section taken along the line B-B' of Figure 2,
- Figure 5: is a cross-section view from the rear face side (the side opposite to the product face) of the steel insert die piece used in Example 2,
- Figure 6: is a cross-section view taken along the line C-C' of Figure 5,
- Figure 7: is a cross-section view taken along the line D-D' of Figure 5,
- Figure 8: is a chart comparing examples by glossiness,
- Figure 9: is an explanatory chart of comparative examples of transcription accuracy percentages,
- Figure 10: is a cross-section view showing an example of an injection moulding metallic mould relating to the moulding method embodiment of this invention,
- Figure 11: is a cross-section drawing viewed from the rear face side (the side opposite to the product face side) of the metallic mould surface high rate heating and cooling insert die piece,
- Figure 12: is a cross-section view taken along the line A-A' of Figure 11,
- Figure 13: is an explanatory chart of a comparative example showing detected temperatures,

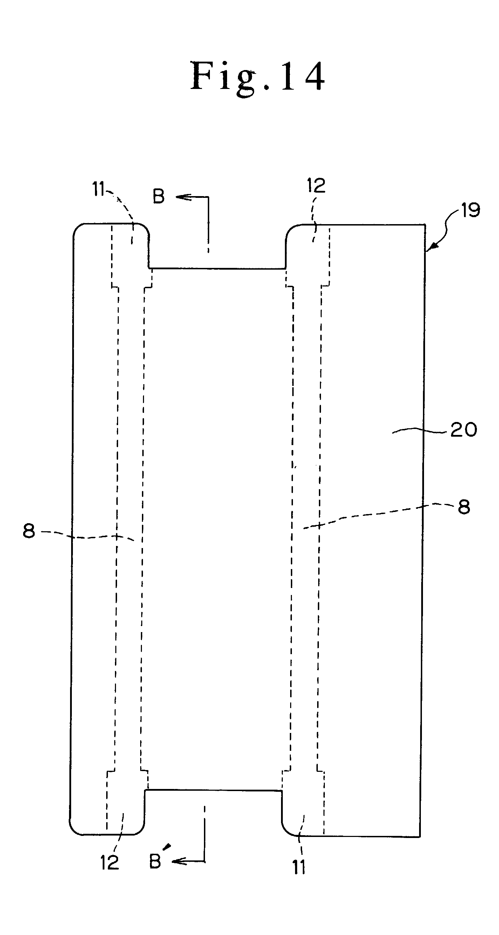

- Figure 14: is a cross-section drawing viewed from the rear face side (the side opposite to the product face side) of the steel material insert die piece that was used in the Example 7,

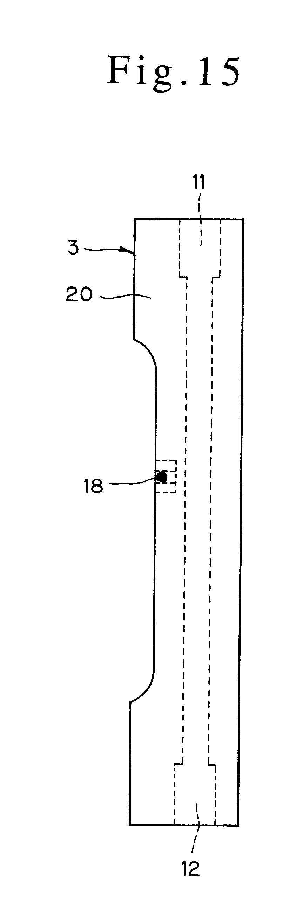

- Figure 15: is a cross-section view taken along the line B-B' of Figure 14,
- Figure 16: is an explanatory chart of comparative examples of glossiness, and
- Figure 17: is an explanatory chart of comparative examples of transcription accuracy percentage.

### [Embodiment 1]

Some preferred embodiments of the above mentioned invention are to be explained next.

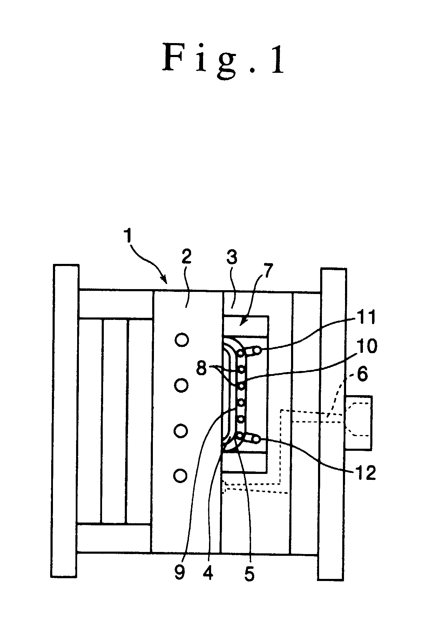

Figure 1 is a diagram showing an embodiment of a plastic injection moulding metallic mould for use in the moulding method of this invention.

The plastic injection mould 1 shown in Figure 1 consists of a core 2 (the invisible face side of the product) and a cavity 3 (the visible face side of the product) which are both connected to an injection moulding machine (not shown). The core 2 and the cavity 3 can be opened and closed. The concave portion 5 forming the outside shape of the product 4 is formed by the core 2 and the cavity 3, and the molten plastic flows into the concave portion 5 from the injection moulding machine via the sprue 6 provided at the required location in cavity 3. The product visible face side is rapidly heated to a high temperature and then cooled down during the moulding process by a medium flowing into a temperature adjusting channel 8 inside the metallic mould surface high speed heating and cooling insert die piece 7. The medium flowing inside the channel 8 is associated with a high frequency heater and a cooler (not shown) and is fed via the inlet port 11 from the temperature control apparatus and circulated through the channel and retumed via the outlet port 12.

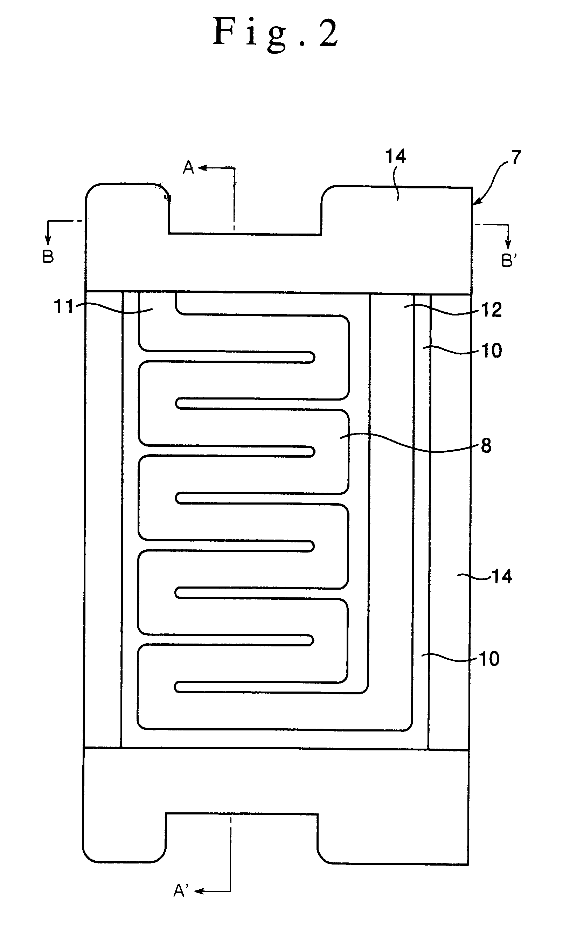

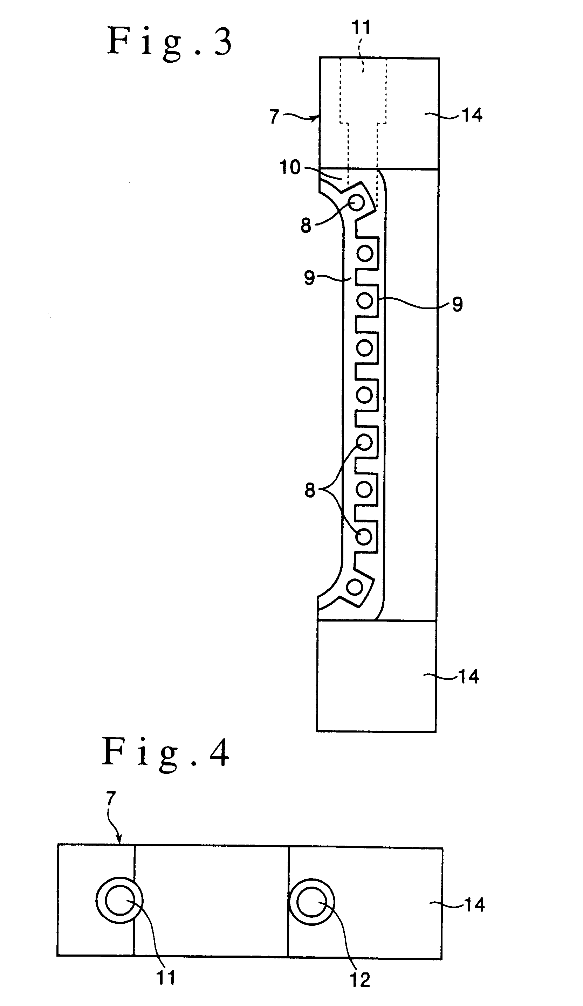

Figure 2, Figure 3 and Figure 4 show diagrammatic views of the mould surface high speed heating and cooling insert die piece 7, which is shown in Figure 1. The metallic mould surface electrolytic cast or electroformed layer 9 in contact with the normally visible face of the product is made of Ni-Cr, and the metallic mould temperature adjusting medium circulation channel 8 is formed in the interior of this layer. This temperature adjusting medium circulation channel 8 covers the surface of the electric casting layer 9 and the channels are formed using a lost wax process on the internal face of the metallic mould cast layer 9. After this the lost wax is eluted to make a cavity and thus forms a mono-block structure integral with the metallic mould surface layer 9. The cross-sectional shape of metallic mould temperature adjusting medium circulation channel is 5mm x 5mm square with a pitch 12 mm. The distance between the surface and the surface of metallic mould die piece 7 in contact with the product 4 is 2 mm. Further, the heat insulation layer 10 is formed of epoxy resin and reinforcing material of about 2 mm thickness and provided at the rear face of channels 8. The heat capacity is structured to be small by thermally isolating the metallic mould portion performing the rapid heating and cooling. The mould has a steel support 14.

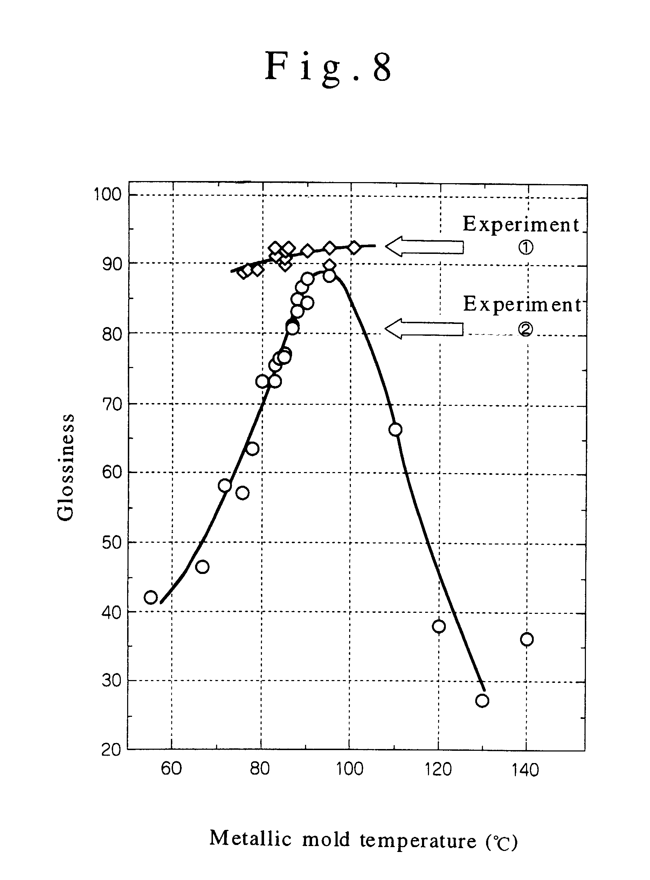

The visible face of the product defined by the mould surface has a temperature about the level of the resin glass transfer temperature and the injection moulding is conducted using the unit of Figure 1 with an ABS resin containing 20% glass filler (15G20, glass transfer temperature at 98° C, Japan Synthesis Rubber). At this time, the metallic mould surface temperature was set to the conditions (Experiment 1) for cooling down over a short time after heating until the completion of resin charging. Further, the moulding cycle (mould closing - injection - pressure holding - cooling - mould opening - removal of the moulded product) at this time was set to 60 seconds, the time required for the heating was 18 seconds, the time required for the cooling was 25 seconds, and the temperature raising speed of the mould surface was set to 2° C per second and the temperature lowering speed was set to 2° C per second. The visible face glossiness measured result of the product obtained is shown in Figure 8.

In the above mentioned Experiment 1, the metallic mould surface temperature during the resin charging was raised to the level higher than the glass transfer temperature of the resin and moreover at a temperature raising and cooling rate of 2° C per second. The product face glossiness was 92 at the maximum value, thus a product of high glossiness could be obtained despite the inclusion of glass filler. The glossiness is an index of the transcription property or surface finish, and the high transcription property could be obtained by rapidly cooling down the mould face after heating to a level higher than the glass transfer temperature of resin. At the point of removal of the product, the product had become sufficiently solidified, and there were no deformation and mould separation problems such as cumber of product.

### [Embodiment 2]

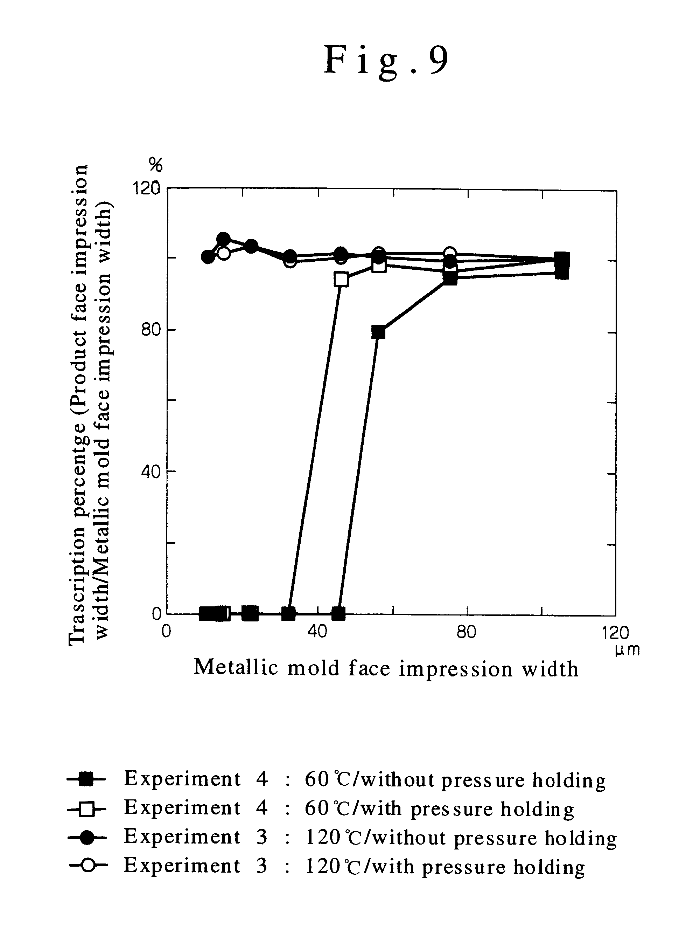

The product visible face side of the metallic mould had the surface temperature rapidly heated to 120 ° C during the resin charging and rapidly cooled down to 60° C during cooling and the injection moulding was conducted (Experiment 3) using the same device as Embodiment 1 and with an impact resistant polystyrene (HT560, glass transfer temperature at 97° C, Idemitsu Petroleum Chemical). The moulding cycle (metallic mould closing - injection - pressure holding - cooling - metallic mould opening - taking out the product) was set to 60 seconds, the time required for heating was 18 seconds, the time required for cooling was 25 seconds, and the temperature raising speed of the mould surface temperature was set to 3° C per second with the temperature lowering speed being set to 2°C per second. The impression of different sizes of square cone shapes was previously formed on the metallic mould surface using a diamond tip tool, the width of impression between the metallic mould surface and the resin surface was measured, and the transcription property was evaluated using the ratio (resin surface impression width/metallic mould surface impression width) of this width as the transcription percentage. Figure 9 shows the measured result of impression transcription percentage obtained between product and mould.

In the above mentioned Experiment 2, the transcription percentage indicated a high value of approximately 100% in any size square cone shape impression from 10 microns to 100 microns. Further, the approximately same transcription percentage was obtained whether under pressure or not, and the high transcription property could be obtained at a low pressure.

The temperature of the product visible face side of the mould surface was changed to a level around the resin glass transfer temperature and the injection moulding was conducted using the same device and resin as Embodiment 1. At this time, the metallic mould surface temperature used the conditions of Experiment 2 for controlling the constant temperature from the charging to the cooling of resin. The moulding cycle (metallic mould closing - injection - pressure holding - cooling - metallic mould opening - taking out the product) at this time was for 60 seconds, the time required for heating was 18 seconds, the time required for cooling (the heated temperature was kept constant) was 25 seconds, the temperature raising speed of metallic mould surface temperature was set to 2°C per second and the temperature lowering speed was set to 0°C per second to keep the heated temperature at a constant level. The visible face glossiness measured in the product is shown in Figure 8.

Also in the said Experiment 2, the product of high glossiness could be obtained with the glossiness of product visible face being about 90 in the region where the metallic mould surface temperature was about the glass transfer temperature of the resin despite the inclusion of glass filler, but the glossiness had dropped as compared with Embodiment 1. Further, if the metallic mould surface temperature was raised above the glass transfer temperature of the resin, the glossiness of the product visible face noticeably fell and moreover the product was not sufficiently solidified at the time of removal of the product, and there appeared deformation and mould separation problems such as the obstruction caused by the product.

### [Comparison Example 2]

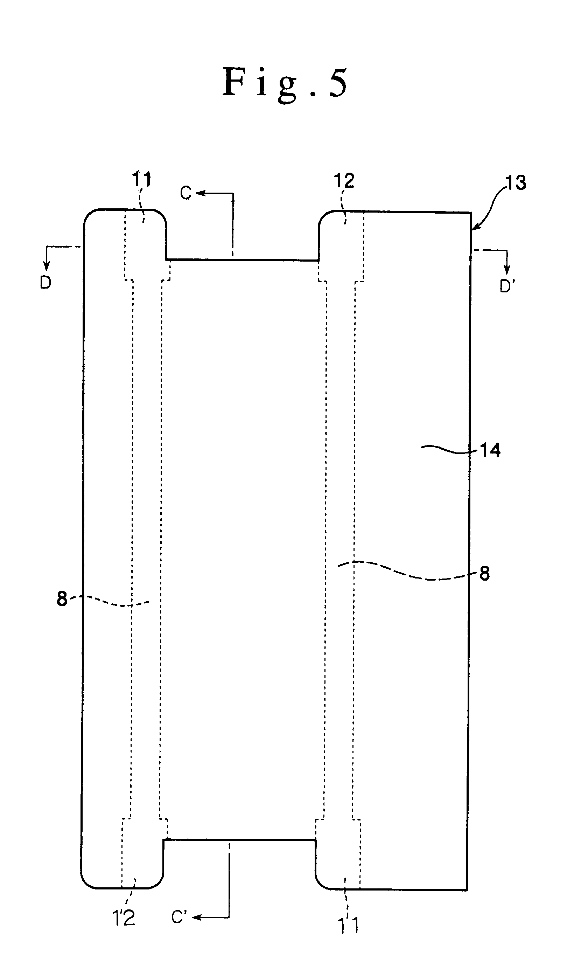

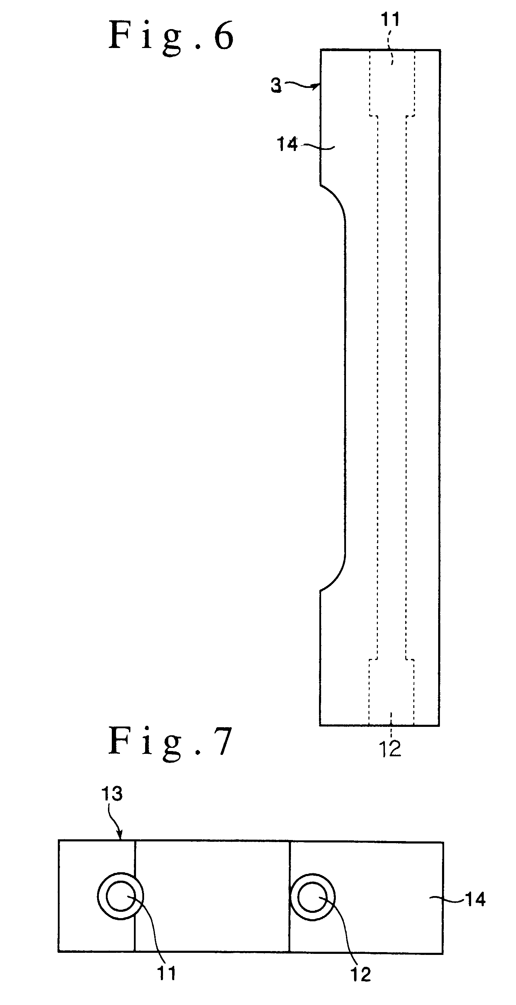

Using the same device and resin as that of Embodiment 1 but replacing the metallic mould surface high speed heating and cooling insert die piece 7 of Embodiment 1 with a steel insert die piece 13 (Figure 5 to Figure 7) that simulated a customary metallic mould structure made of steel material S55C where two mould temperature adjusting medium circulation channels 8 are machined to form tunnels, the moulding was conducted under the temperature control conditions of heating the product visible face side metallic mould surface temperature during the resin charging to the level around the glass transfer temperature and cooling it down to 60°C during the cooling.

When the metallic mould face had been heated up to 100°C, the lustre of product face showed a maximum value, and if the metallic mould face temperature was lower than or higher than the said value, the glossiness, namely, the transcription property showed a tendency to drop. Moreover, the moulding cycle (metallic mould closing - injection - pressure moulding - cooling - metallic mould opening - removing the product) when the metallic mould face has been heated to 100°C was 84 seconds, the time required for heating was 39 seconds, the time required for cooling was 40 seconds and the temperature raising speed of the mould surface was 1°C per second with the temperature lowering speed being at 1°C per second. The moulding cycle was also lengthened by 40% as compared with that of Embodiment 1. The glossiness value of the product visible face had fallen to 88 in comparison with the product glossiness at 92 of Embodiment 1.

If the moulding cycle was set to 60 seconds in the same way as that of Embodiment 1, the temperature of the metallic mould surface was low and the product lustre fell noticeably. The product was likely to deform because the cooling of metallic mould surface was slow and the product temperature when removed was higher.

### [Comparison Example 3]

The injection moulding was conducted (Experiment 4) with the product visible face side metallic mould surface temperature being set to a constant 60°C using the same device and resin as in Embodiment 2. Figure 9 shows the result of measuring the impression transcription percentages of the product obtained and the mould.

In the said Experiment 4, the transcription percentage proved to be 0% for a square cone impression less than 30 microns. Further, under conditions of pressure, the transcription percentage can be slightly improved in comparison with the conditions of no pressure, but a high transcription percentage as that of Embodiment 2 could not be obtained. The above Embodiments 1 and 2 and Comparison Examples 1 to 3 correspond to the methods of Claims 1 to 4.

There now follows examples of the invention with Embodiments 3 to 8 which correspond to the methods and apparatus of Claims 5 to 11.

Claims 5 to 11 are characterised in that the temperature detection sensor is directly assembled into the moulding surface material layer of the metallic mould and this temperature sensor is positioned as close as possible to the moulding surface and is integrated with the moulding surface material layer.

Furthermore, for the manufacturing method of the plastic injection moulding mould, the temperature detection sensor is directly assembled into the electric cast layer by arranging the temperature detection sensor at a position as close as possible to the moulding surface within the moulding surface layer of the metallic mould during the forming of this electrically cast layer. The thermal medium channel is formed on the rear face of the moulding surface material layer using a hollow moulding material that can be removed later, and moreover after the electrically cast layer has been formed on the outside of this thermal medium channel, the said hollow moulding material is eluted, and the temperature detection sensor and the thermal medium pipe channel are formed as a mono block inside the moulding surface material layer of metallic mould. The said invention is characterised in these two respects.

Furthermore, in the injection moulding method for plastic products while controlling the metallic mould temperature, the present invention is characterised in that the temperature detection sensor is not only brought as close to the surface of moulding surface material layer of the mould for direct assembly thereunto but the temperature of thermal medium supplied to the said thermal medium channel in the metallic mould from the metallic mould temperature adjusting apparatus is controlled on the basis of the moulding surface temperature of the metallic mould detected using the said temperature detection sensor formed in a mono-block with the thermal medium channel and for control to a level higher than the fusion point of resin if the material resin is crystal and to a level higher than the glass transfer temperature if the material resin is non-crystal, the heating thermal medium is controlled so that the surface temperature of metallic mould may have a temperature rise rate higher than 2°C per second, and after maintaining this temperature during the time of resin charging, the temperature of the cooling thermal medium being supplied to the metallic mould after the completion of charging is controlled so that the surface temperature of the metallic mould falls at a rate greater than 2°C per second.

In this invention the structure of the metallic mould and the manufacturing method with good temperature response can be as disclosed in Japanese Patent Application No. H9-284817 and Japanese Patent Application No. H8-184441.

Moreover, this invention can not only be applied to a general injection moulding method but also to a gas assisted moulding, compression moulding method or the like.

The resins to which the plastic injection moulding method of this invention and the apparatus can be applied comprise mixed resins, resins with reinforcing materials or organic and inorganic fillers as well as foam agents and include metallic and other grain tone additives. Such materials may be mixed with universal resins such as polyolefin resins, polystyrene resins, ABS resins, and others as well as industrial resins such as polycarbonate and polyamide resin.

The injection moulding as described above has the surface temperature of the mould and the profile set by the mould temperature controller. The mould cooling- temperature is controlled at a high rate and with high accuracy over a short time with the surface temperature of the mould falling at more than 2°C per second after the completion of resin charging and after controlling the heating temperature at a high rate and with accuracy over a short period with a temperature increase rate of more than 2°C per second up to a level higher than the fusion point temperature of resin if the material resin is crystal or up to a level higher than the glass transfer temperature of the resin if non-crystal. By controlling the heating and cooling temperature of a thermal media supplied to the mould by the mould temperature adjusting apparatus on the basis of the surface temperature of metallic mould detected using a temperature detection sensor formed as a mono-block with the surface of the mould and in proximity to the surface with the heating and cooling thermal medium channel being incorporated also into the mould. The solidification layer of resin in contact with the surface of the mould is heated and controlled by the surface temperature of the mould with high accuracy during the resin charging so that the product is unlikely to become deformed as compared with moulding with a low temperature mould. Thus the transcription percentage can be improved because the resin surface readily conforms to the surface of the metallic mould through the internal pressure of resin. Moreover, because a high physical strength can be obtained between the resin and the surface of the mould by the adhesion, the separation of resin from the mould is delayed and the solidification layer develops to a sufficient strength. The influence by thermal shrinkage of resin is less and for this reason transcription defects attributable to the filler are avoided.

As the resin surface can be more readily deformed, the resin internal pressure necessary for forcing the resin against the surface of the mould can be lower, and because the solidification layer of resin is thin, the pressure loss is small and moulding with a lower internal pressure is possible.

Through detecting the surface temperature of the mould with high accuracy and by improving the temperature response of the metallic mould and controlling the heating and cooling temperature to a target temperature and time with high accuracy over a short time based on the detected temperature, the problems which follow can be reduced.

If the material resin should be exposed more than necessary to the surface of high temperature metallic mould, the shrinkage volume of material resin becomes greater, the substances mixed into the resin are left on the resin surface by post-moulding shrinkage, and a transcription defect occurs. In this case the moulding cycle is lengthened and extra energy input becomes necessary. The product cost is also increased. If the detection of the surface temperature of the mould or the control accuracy of the temperature is poor, the outside appearance and shape accuracy is reduced. If the change-over to the cooling stage is delayed by making the mould surface too high a temperature then deformation tends to appear to the product.

Further preferred embodiments of this invention are described hereunder.

### [Embodiment 3]

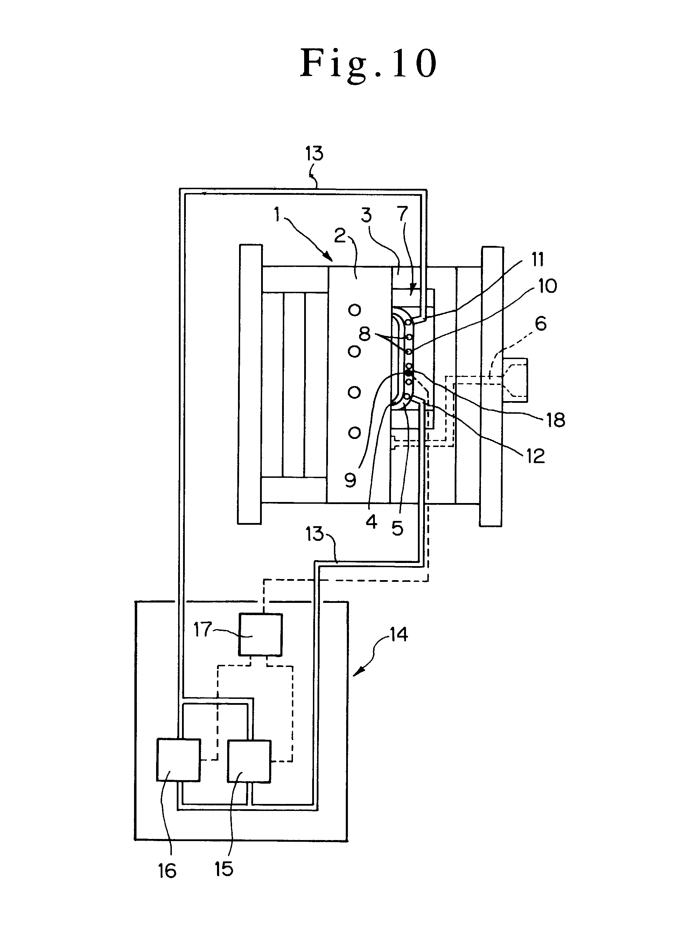

This embodiment corresponds to Claims 5 to 11, and the details are explained with reference to Figures 10 to 12. Figure 10 shows a schematic diagram of an embodiment of plastic injection moulding metallic mould according to this invention.

The plastic injection mould 1 shown in Figure 10 comprises a core 2 (non-visible face side of the product) and a cavity 3 (visible face side of the product) which are both connected with an injection moulding machine (not shown). The core 2 and the cavity 3 can be opened and closed. The concave portion 5 corresponding to the outside shape of the product 4 is formed by the core 2 and the cavity 3, the molten plastic flows into the concave portion 5 from the injection moulding machine through the sprue 6 installed at a defined location in cavity 3. The visible face side of the product 4 is heated to a high temperature and cooled down at a high rate during the moulding by the thermal medium flowing inside the metallic mould temperature control channel 8 located inside the metallic mould heating and cooling insert die piece 7, and is removed from the plastic mould 1 after solidification. The thermal medium flowing inside the metallic mould channel 8 is heated up and cooled down by the temperature adjusting heating unit 15 and the cooling unit 16 inside the apparatus 14.

The temperature controller 17 located inside the apparatus 14 controls the output of the heating unit 15 and the cooling unit 16 in accordance with the temperature of sensor 18 which is embedded as close as possible to the surface of the mould and inside the surface electrically cast layer 9 and formed integral with the said surface of the mould. The sensor 18 controls the temperature of the medium flowing inside the mould circulation channel 8.

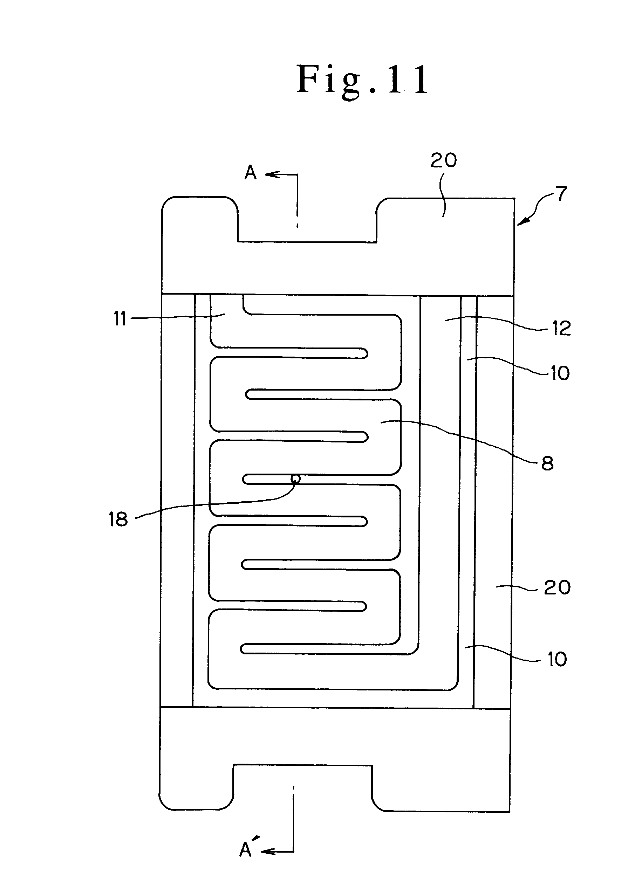

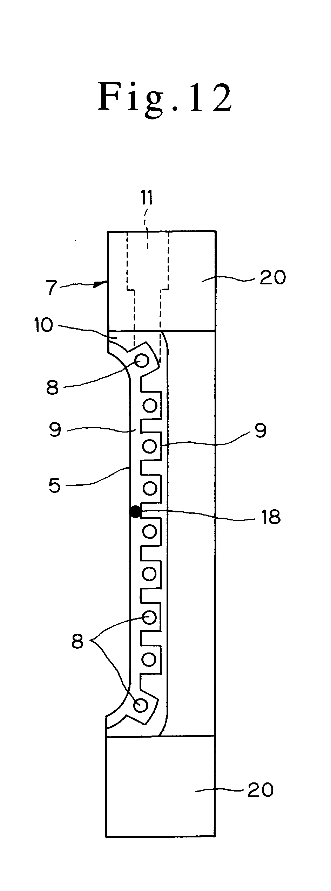

Figures 11 and 12 show views of the mould surface high speed heating and cooling insert die piece 7 shown in Figure 10. The electrically deposited layer 9 forming the metallic mould surface layer which is in contact with the visible face of the product is of Ni-Cr, and the metallic mould temperature detection sensor 18 is buried within this. The mould temperature adjusting thermal medium circulation channel 8 is formed therein also. This metallic mould temperature detection sensor 18 was directly assembled at a position of 0.5 mm from the surface of the mould so that it was as close as possible to the surface. The sensor 18 is formed integral with the layer 9 so that a temperature close to the surface temperature of metallic mould may be measured. After the channels were formed by a lost wax process on the mould internal face this surface was provided with the layer 9, and then the wax was eluted to produce the cavities. The mould temperature adjusting channel 8 is thus formed integrally with the surface layer 9.

The cross section of the channel 8 is 5 mm x 5 mm square, and the pitch is 12 mm. The distance between the surface of the channel 8 and the surface of the insert die piece 7 in contact with the product was set to 2 mm. In addition, a heat insulation layer 10 was formed of an epoxy and other reinforcing material of the thickness of some 2 mm provided on the rear face of the metallic mould channel 8. Thus the thermal capacity was made of small size by isolating thermally the mould portion to facilitate rapid heating and cooling.

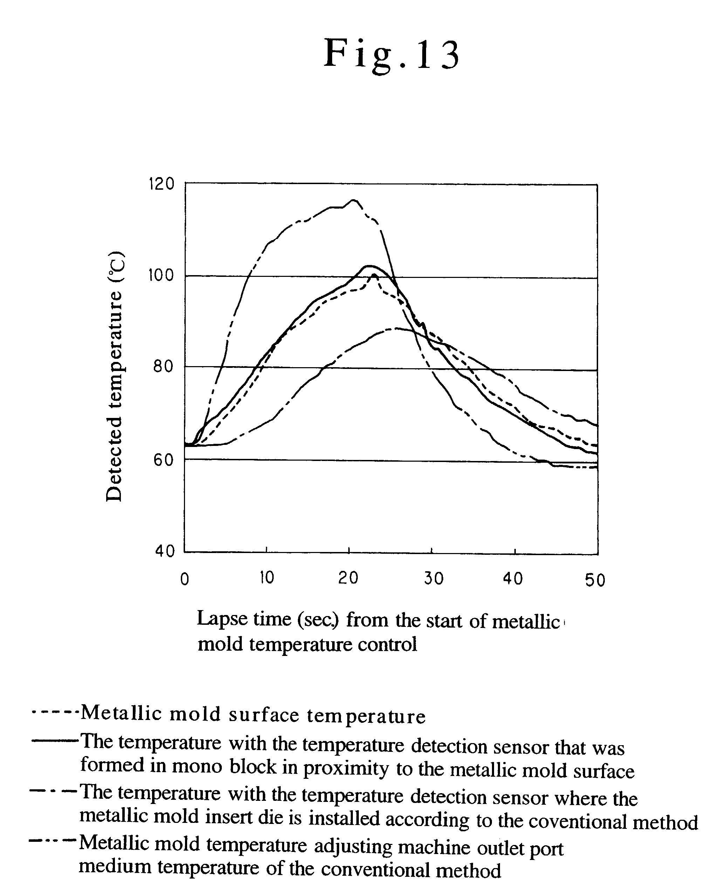

Using the unit of Figure 10 and with a temperature detection sensor installed separately for the experiment on the surface of metallic mould, the output of the mould temperature adjusting medium heating unit 15 and the mould temperature adjusting medium cooling unit 16 were controlled and the medium temperature flowing inside the mould channel 8 was adjusted so that the surface temperature of the metallic mould was 100°C on the basis of the temperature detected by the temperature detection sensor. Figure 13 shows a comparison of temperatures of the temperature detection sensor that was separately installed for the experiment on the surface of the metallic mould and that of the temperature detection sensor 18 embedded in the surface of the mould 9.

The temperature of the metallic mould from sensor 18 when the temperature of the sensor separately installed on the surface of the mould reached 100°C was 102°C and the difference of both the detection temperatures was only 2°C. The time difference between the detection temperatures when at a maximum was extremely small, being 1 second. The difference between the temperature detection sensors proved negligible as far as the temperature and time were concemed.

### [Embodiment 4]

Using the unit of Figure 10, the metallic mould temperature controller 17 was set so that the visible face side of the mould surface temperature was 120°C when being heated and 60°C when being cooled. The surface temperature of the mould during the heating was measured. The maximum temperature indicated by the sensor 18 during the heating was 121°C and the maximum surface temperature of the metallic mould was 122°C. The difference from the pre-set temperature of the mould temperature controller 17 proved high control accuracy being 2°C (error of 2%).

The time required for the heating was 18 seconds and the time required for the cooling was 25 seconds.

### [Embodiment 5]

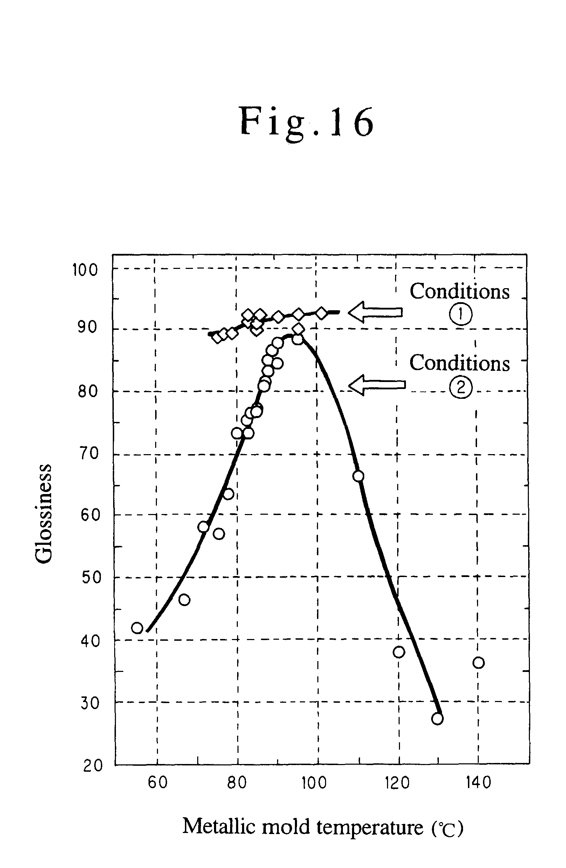

Using the unit of Figure 10 with ABS resin (15G20, glass transfer temperature at 98°C C, Japan Synthesis Rubber) containing 20% of glass filler, the pre-set temperature of metallic mould surface controller 17 was changed and the injection moulding was conducted so that the visible face side of the mould temperature was about the resin glass transfer temperature. The surface temperature of the mould at this time was set to the condition (conditions 1) for cooling within a short time after heating up until the completion of the resin charging. Further, the moulding cycle (injection - pressure holding - cooling, removing the product) was 60 seconds and the temperature raising speed of the mould surface was set to 2°C per second. Figure 16 shows the visible face glossiness measured on the product obtained.

Under the said conditions (1), the product face glossiness was a maximum at 92 with the pre-set temperature of controller 17 being 100°C, the surface temperature of the mould during the resin charging was 101°C which was higher than the glass transfer temperature of the resin and moreover the temperature increase and cooling rates were 2°C per second. The product had a high lustre even with resin containing glass filler. The lustre is an index of transcription property, and a high transcription property could be obtained by rapidly cooling down the mould surface after accurately heating higher than the glass transfer temperature of the resin. In addition, the product was sufficiently solidified at the time of removal, and there was no deformation or mould separation problems.

### [Embodiment 6]

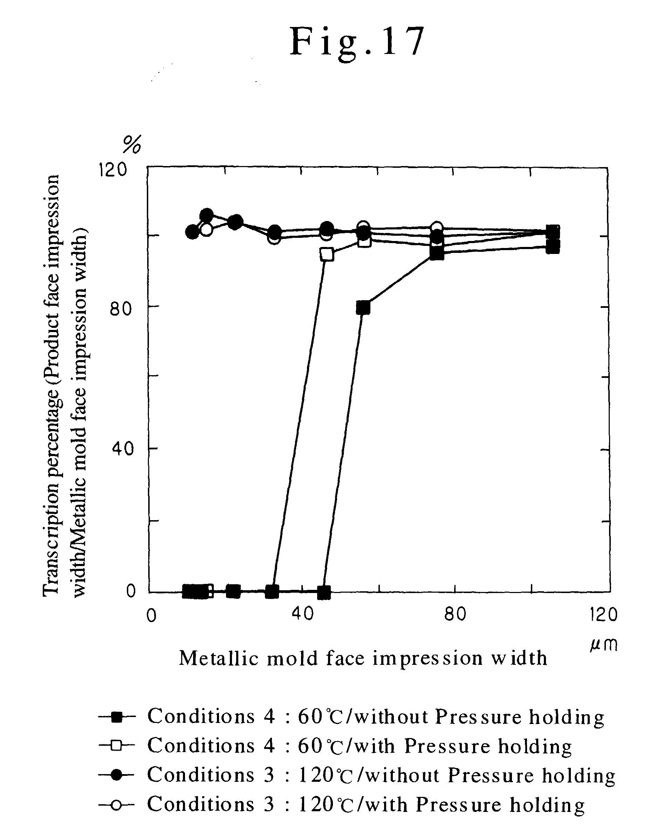

Using the same device as that of embodiment 5 and high impact polystyrene (HT560, glass transfer temperature at 97°C, Idemitsu Petroleum Chemical), the pre-set temperature of the controller 17 was set to 120°C during the resin charging and to 60°C during the cooling so that the mould surface temperature was higher than the resin glass transfer temperature. The injection moulding was conducted while rapidly heating and cooling (conditions 3). The moulding cycle (injection - pressure holding - cooling, removing the product) was 60 seconds, the time required for the heating was 18 seconds, the time required for the cooling was 25, and the temperature raising rate of the surface temperature of the mould was set to 3°C every second with the temperature lowering rate being set to 2°C every second. Square cone shape impressions different in size were previously provided on the surface of the mould using a diamond tip tool, the width of impressions on the mould surface and on the resin surface was measured, and the transcription property was evaluated as a percentage of this width being resin surface impression width/metallic mould surface impression width. Figure 17 shows the measured result of the transcription percentage between the product and the mould.

Under the said conditions (3), the transcription percentage showed a high value at approximately 100% in any of the square cone shape impressions from 10 microns to 100 microns. In addition, the transcription percentage remained almost the same under conditions of presence or absence of pressure and a high transcription percentage could be obtained at a low pressure.

### [Embodiment 7]

The metallic mould temperature detection sensor 18 of Embodiment 3 was embedded close to the surface of the mould within the layer 9 during forming of the metallic mould layer 9, but could equally be installed between the layer 9 and the heat insulation layer 10 if the layer 9 is thin and the temperature difference between the rear face of layer 9 and the surface of the mould is small.

The metallic mould temperature detection sensor 18 of Embodiment 3 can comprise different metals on the metallic mould surface formed by deposition or by etching or injection, forming electrodes used as a thin film temperature sensor.

### [Comparison Example 4]

Using the same experiment as that of Embodiment 3, the temperature detection sensor incorporated in the insert die was installed, together with the insert die, on to the surface of the mould and a temperature detection sensor was installed also inside the thermal medium channel of the temperature adjusting apparatus. The output of the heating unit 15 and the cooling unit 16 was controlled and the medium temperature flowing inside the channel 8 was controlled so that the surface temperature of the metallic mould was 100°C on the basis of the surface temperature detected by the temperature detection sensor that was separately installed for the experiment on the surface of the mould. Figure 13 shows the detection temperatures of the sensor that was incorporated, together with the insert die, on the surface of the mould and also the temperature sensor that was installed inside the channel of the temperature adjusting apparatus.

When the detected temperature of the temperature detection sensor incorporated on to the surface of the mould reached 100°C the mould temperature was 89°C, and the difference between both the detected temperatures was large at 11°C, and the time difference between the detected temperatures was also 2 seconds, thus the difference between both the temperature detection sensors was large in terms of temperature and time. In a similar manner, the detected temperature of temperature detection sensor installed inside the thermal medium channel of the mould temperature adjusting apparatus was large, the difference being 16°C against the surface temperature of the mould, and the time difference when the temperature had reached the maximum was 3 seconds.

### [Comparison Example 5]

Using the same unit as that of Embodiment 2 except for changing the metallic mould temperature detection sensor to the temperature detection sensor that was incorporated, together with the insert die, on to the surface of the mould of Comparison Example 1 from the mould temperature sensor 18 that was embedded adjacent the surface of the mould, the controller 17 was set and the surface temperature of the mould during heating was measured so that the surface temperature of the product visible face was 120°C during heating and 60°C during cooling. The maximum temperature indicated by the temperature detection sensor incorporated with the insert die on the surface of the mould during heating was 119°C, the maximum metallic mould surface temperature was 128°C , the difference from the pre-set temperature of metallic mould temperature controller 17 was 8°C (error of 7%), thus giving a low temperature control accuracy.

Further, the time required for the heating was 21 seconds, the time required for the cooling was 29 seconds, thus the time was increased by 7 seconds (or 16%) as compared with that of Embodiment 2.

### [Comparison Example 6]

Using the same experiment unit and resin as those of Embodiment 5, the pre-set temperature of the mould temperature controller 17 was changed to conduct the injection moulding so that the surface temperature of the product visible face was at a level around the resin glass transfer temperature. At this time, the surface temperature of the metallic mould was set to such condition that it was controlled at a constant temperature from the charging of resin to the cooling (Condition (2)). Further, the moulding cycle (injection - pressure holding - cooling, removing the product) was 60 seconds, the time required for the heating was 18 seconds, the time required for the cooling (the heating temperature being held at a constant temperature) was 25 seconds, and the temperature increase rate of the mould surface was set to 2°C per second while the temperature lowering rate was set to 0°C per second to maintain the temperature constant. Figure 16 shows the measured visible face glossiness result of the product.

Even under the said conditions (2), a product of high lustre could be obtained even though the glossiness of the visible face was about 90 and containing the glass filler when the surface temperature of metallic mould was in the region of the glass transfer temperature of the resin. the glossiness was reduced as compared with Embodiment 3. Further, if the surface temperature of the metallic mould was raised above the glass transfer temperature of the resin, the glossiness of the product visible face fell markedly and moreover at the point of removing the product it was not sufficiently solidified and thus there appeared deformation and mould separation problems.

### [Comparison Example 7]

Using the same device and resin of Embodiment 3 except for replacing the metallic mould heating and cooling insert die piece 7 of Embodiment 5 with a steel insert die piece 19 made of S55C that simulated the usual metallic mould structure where two mould temperature adjusting circulation channels 8 are machined, and replacing the temperature sensor in the metallic mould temperature controller 17 with the temperature detection sensor 18 incorporating the steel material insert die piece 19 together with the insert die on to the surface, the pre-set temperature of metallic mould temperature controller 17 was changed to carry out the injection moulding so that the product visible face during the resin charging becomes settled around the resin glass transfer temperature. When the pre-set temperature of controller 17 has been set to 87°C and the surface temperature of metallic mould is at 100°C which is higher than the glass transfer temperature of resin, the lustre of the product face was a maximum value, and even if the surface temperature was lower than or higher than the said value, the glossiness or the transcription property tended to reduce. The moulding cycle (injection - pressure holding - cooling, removing the product) was 84 seconds, the time required for the heating was 39 seconds, the time required for the cooling was 40 seconds and the temperature raising speed of the mould surface was 1°C per second with the temperature lowering speed being 1°C per second. The moulding cycle was lengthened by 40% as compared with that of Embodiment 2. the glossiness measured on the product visible face reduced to 88 as compared with the product lustre 92 in Embodiment 5.

### [Comparison Example 8]

Using the same device and resin as those of Embodiment 6, the injection moulding was conducted with a pre-set temperature and the temperature controller 17 being kept constant level at 60°C (conditions (4)). Figure 17 shows the measured result of the transcription percentage of the product and mould.

Under the said conditions (4), the transcription percentage became 0% in the square cone shape impression smaller than 30 microns. Further, under the conditions of a holding pressure, the transcription percentage could be slightly improved as compared with no holding pressure but the high transcription percentage as found in embodiment 6 could not be obtained.

### [Comparison Example 9]

Using the same device as that of Embodiment 4 except for replacing the metallic mould surface high speed heating and cooling insert die piece 7 with a steel material insert piece 19 made of S55C simulating the structure of a customary metallic mould with two metallic mould temperature adjusting thermal medium circulation channels 8 machined therein and changing the temperature sensor from the input into the temperature controller 17 to the temperature detection sensor 18 that was assembled with the insert die on the surface of steel die 19, the metallic mould temperature controller 17 was set so that the surface temperature of the product visible face side of the mould was 120°C during the heating and 60°C during the cooling, and the surface temperature of the mould during the heating was measured. The maximum temperature indicated by the mould temperature sensor 18 on the rear face side of the steel material insert die piece 19 during the heating was 122°C and the maximum surface temperature of the mould was 137°C, the surface temperature of the metallic mould became far higher than the target temperature, and the difference from the pre-set temperature of the controller 17 was large at 17°C (error 17%), which was a poor temperature control accuracy.

Further, the time required for the heating was 76 seconds, the time required for the cooling was 77 seconds, thus the cycle became longer being 256% and the energy loss was large due to the extra heating and cooling necessary of the surface temperature of the mould.

## Claims

1. A method for injection moulding plastics at low pressures to provide high precision moulded products characterised in that the metallic injection mould temperature is controlled over a short time and at a high rate of change using a temperature increase rate greater than 2° C per second to raise the metallic mould surface temperature in contact with the plastics product to a level higher than the (glass) transfer or injection temperature of the plastics resin where the resin material is non-crystalline, and after maintaining this temperature during the resin mould charging time, cooling down the metallic mould surface after the completion of charging over a short time and at a high rate of change using a temperature reduction rate of greater than 2° per second.

2. A method in accordance with Claim 1, characterised in that the metallic mould surface temperature in contact with the plastics product is raised to a level higher than the fusion point temperature of the plastics resin where the resin material is crystalline.

3. A method in accordance with Claim 1 or Claim 2 which is characterised by the heating and/or cooling of the metallic mould surface being limited to that portion of the metallic mould surface which is in contact with a normally visible surface of the product.

4. A method in accordance with Claim 1 or Claim 2 or Claim 3 which is characterised by dividing the metallic mould surface area into a plurality of zones each of which is temperature controlled over the short time and at a high rate of change using different heating temperatures, cooling temperatures or temperature controlling times.

5. A method for injection moulding plastics to produce plastics products the method being carried out whilst controlling the metallic mould temperature, characterised in that a temperature detection sensor is incorporated as close as possible to the moulding surface of the metallic mould and wherein a conduit or channel carrying a thermal medium is integrally provided in the mould with the temperature of the thermal medium being controlled by a temperature adjusting means in accordance with the moulding surface temperature of the metallic mould detected by the said temperature sensor, the temperature being set higher than the fusion point temperature of the plastic resin if the resin is crystalline, and higher than the injection temperature of the plastics resin if the resin is non-crystalline the heating medium being controlled so that the surface temperature of the metallic mould is raised at a rate greater than 2° C per second, and after maintaining the temperature during the resin charging time, controlling the temperature of cooling through the thermal medium after completion of charging so that the surface temperature of metallic mould reduces at a rate greater than 2° C per second.

6. A method for injection moulding plastics to produce plastic products as claimed in Claim 5, characterised by controlling the temperature of the medium being supplied to the metallic mould using a temperature controlling means on the basis of the surface temperature of the metallic mould as measured using the said temperature detection sensor during the moulding with the metallic mould having the temperature detection sensor and the thermal medium conduit or channel formed integrally with the moulding surface material layer of the metallic mould and as close as possible to the moulding surface of the metallic mould, the temperature control being carried out so that the target metallic mould surface temperature and temperature profile set by the mould temperature controller is limited to a part only of the surface portion of metallic mould or to a part only which is in contact with a visible surface of the moulded product.

7. A method for injection moulding plastics to produce plastic products as claimed in Claim 5 or Claim 6, characterised by controlling the temperature of the medium being supplied to the metallic mould using a temperature controlling means and based on the surface temperature of the metallic mould as measured using the said temperature detection sensor during the injection moulding, the metallic mould having the temperature detection sensor and the thermal medium pipe, conduit or channel formed integrally with the moulding surface material layer of the metallic mould and as close as possible to the moulding surface of the metallic mould, the temperature control being carried out so that the target metallic mould surface temperature and the temperature profile set by the mould temperature controller is divided into ranges for controlling the high rate heating and cooling in a plurality of zones, a temperature detection sensor and a thermal medium channel being provided for every zone, the product being moulded using a heating temperature, cooling temperature and temperature control profile that is different for each zone.

8. A metallic mould for injection moulding plastics material characterised in that a temperature detection sensor is incorporated within the moulding surface material layer of the metallic mould with said temperature sensor as close as possible to the mould surface and integral with the moulding surface material layer.

9. A metallic mould in accordance with Claim 8 which is characterised in that the moulding surface material layer of the metallic mould is formed by an electrolytic deposit.

10. A metallic mould in accordance with Claim 8 or 9, which is characterised in that the thermal medium channel is formed within the moulding surface material layer.

11. A method for the manufacture of a plastic injection moulding metallic mould characterised by assembling the temperature detection sensor within the mould surface layers for integration therewith by arranging the temperature detection sensor at a position as close as possible to the moulding surface within the moulding surface material layer of the metallic mould during the forming of the layer by electrolytic means, subsequently forming the thermal medium channel on the rear face of the moulding surface material layer and then forming a layer outside this thermal medium channel to provide a single mould incorporating the temperature detection sensor and the thermal medium channel inside the moulding surface material layer of the metallic mould.
